# NEUE EUROPÄISCHE PATENTSCHRIFT

(11) **EP 2 342 477 B2**
(45) Veröffentlichungstag und Bekanntmachung des Hinweises auf die Entscheidung über den Einspruch: **03.04.2019**
(45) Hinweis auf die Patenterteilung: 05.12.2012
(21) Anmeldenummer: 09778739.4
(22) Anmeldetag: 26.09.2009
(51) Int. Cl.: F16H 3/66

(54) **GETRIEBEEINHEIT**
TRANSMISSION UNIT
UNITÉ DE TRANSMISSION

(30) Priorität: 03.11.2008 DE 102008055626
(43) Veröffentlichungstag der Anmeldung: 13.07.2011
(73) Patentinhaber: Daimler AG, 70327 Stuttgart (DE)
(72) Erfinder: LEESCH, Mirko, 09419 Thum (DE); LISTNER, Thomas, 73732 Esslingen (DE); MÜLLER, Jörg, 09113 Chemnitz (DE); RESCH, Rico, 01723 Wilsdruff (DE); RIEDL, Klaus, 72074 Tübingen (DE)
(74) Vertreter: JENSEN & SON
(86) Internationale Anmeldenummer: PCT/EP2009/006956
(87) Internationale Veröffentlichungsnummer: WO 2010/060500

(56) Entgegenhaltungen:
- WO-A-02/079670
- DE-A1- 19 949 507
- DE-A1-102005 032 878
- DE-A1-102005 032 931
- US-A1- 2007 037 657
- US-A1- 2007 072 732
- US-A1- 2007 179 009
- US-A1- 2008 242 491
- US-A1- 2008 242 492
- US-A1- 2008 261 764
- US-A1- 2008 269 006

## Beschreibung

Die Erfindung betrifft eine Getriebeeinheit für einen Antriebsstrang eines Kraftfahrzeugs.

Es sind bereits Getriebeeinheiten mit vier Planetenradsätzen und sechs Koppeleinheiten bekannt.

Das gattungsgemäße Ausführungsbeispiel gemäß Figur 5A der WO 02/079670 zeigt eine Getriebeeinheit, die mit vier entlang einer Hauptrotationsachse hintereinander angeordneten Planetenradsätzen und sechs Koppeleinheiten zehn Vorwärtsgetriebegänge ermöglicht.

Der Erfindung liegt insbesondere die Aufgabe zugrunde, eine kompakte Getriebeeinheit mit einer hohen Anzahl von Vorwärtsgetriebegängen bereitzustellen. Sie wird gemäß der Erfindung durch die Merkmale des Anspruchs 1 gelöst. Weitere Ausgestaltungen ergeben sich aus den Unteransprüchen.

Erfindungsgemäß wird eine Getriebeeinheit, insbesondere eine Kraftfahrzeuggetriebeeinheit, mit vier, einem ersten, einem zweiten, einem dritten und einem vierten, entlang einer Hauptrotationsachse hintereinander angeordneten Planetenradgetrieben, mit sechs Koppeleinheiten, die ermöglichen, neun Vorwärtsgetriebegänge zu schalten, mit einer Antriebseinheit, die drehfest mit einem zweiten Sonnenrad des zweiten Planetenradgetriebes und einem vierten Planetenradträger des vierten Planetenradgetriebes verbunden ist, und mit einer Abtriebseinheit, die drehfest mit einem dritten Planetenradträger des dritten Planetenradgetriebes verbunden ist, vorgeschlagen, wobei die Getriebeeinheit ein erstes Hohlrad des ersten Planetenradgetriebes, ein Kopplungselement, ein drittes Sonnenrad des dritten Planetenradgetriebes und ein viertes Sonnenrad des vierten Planetenradgetriebes aufweist, die alle vier drehfest miteinander verbunden sind. Dadurch kann eine Getriebeeinheit bereitgestellt werden, die eine kompakte Bauweise bei einer hohen Anzahl von Gängen mit guter Stufung und ausreichender Spreizung bereitstellt.

Unter einer "Koppeleinheit" soll insbesondere sowohl eine Kupplungseinheit als auch eine Bremseinheit verstanden werden. Unter einer "Kupplungseinheit" soll insbesondere eine Einheit verstanden werden, die dazu vorgesehen ist, zwei drehbar angeordnete Kopplungselemente wahlweise drehfest zu verbinden oder zu trennen. Unter einer "Bremseinheit" soll insbesondere eine Einheit verstanden werden, die dazu vorgesehen ist, ein drehbares Kopplungselement mit einer feststehenden Einheit, insbesondere einem Getriebegehäuse, wahlweise drehfest zu verbinden oder zu trennen.

Unter "einem ersten, einem zweiten, einem dritten und einem vierten Planetenradgetriebe, die entlang einer Hauptrotationsachse hintereinander angeordnet sind", soll in diesem Zusammenhang insbesondere eine Reihenfolge von vier Planetenradgetrieben verstanden werden, die entlang der Hauptrotationsachse in dieser Reihenfolge angeordnet sind, wobei vorteilhafterweise das erste Planetenradgetriebe der Antriebswelle zugewandt ist. Zur Vereinfachung sollen weiter unter einem "ersten bis vierten Planetenradträger", einem "ersten bis vierten Sonnenrad" und einem "ersten bis vierten Hohlrad" ein dem ersten bis vierten Planetenradgetriebe zugeordneter Planetenradträger bzw. ein Sonnenrad oder ein Hohlrad verstanden werden, d.h. beispielsweise, dass unter dem ersten Planetenradträger ein Planetenradträger des ersten Planetenradgetriebes verstanden werden soll.

Vorteilhafterweise ist zumindest eine der Koppeleinheiten dazu vorgesehen, zumindest eines der Planetenradgetriebe zu verblocken. Besonders bevorzugt ist eine der Koppeleinheiten dazu vorgesehen, das zweite Planetenradgetriebe zu verblocken. Unter einem "verblockten Planetenradgetriebe" soll ein Planetenradgetriebe verstanden werden, bei dem das Sonnenrad, der Planetenradträger und das Hohlrad drehfest miteinander verbunden sind. Unter einem "Verblocken eines Planetenradgetriebes" soll insbesondere verstanden werden, dass zumindest zwei Getriebeelemente des Planetenradgetriebes drehfest miteinander verbunden werden, wobei unter den Getriebeelementen das Sonnenrad, das Hohlrad und der Planetenradträger verstanden werden sollen. Um ein Planetenradgetriebe zu verblocken, ist es grundsätzlich auch denkbar, den Planetenradträger drehfest mit von dem Planetenradträger geführten Planetenrädern zu verbinden, wodurch die Getriebeelemente ebenfalls drehfest miteinander verbunden sind.

Weitere Ausgestaltungen und weitere Vorteile ergeben sich aus der folgenden Zeichnungsbeschreibung, den Ansprüchen und den Zeichnungen. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung einer erfindungsgemäßen Getriebeeinheit,
- Fig. 2: beispielhafte Übersetzungsverhältnisse für Vorwärtsgetriebegänge der Getriebeeinheit aus Fig. 1,
- Fig. 3: eine Schaltlogik der Getriebeeinheit aus Fig. 1,
- Fig. 4: eine Schaltbarkeit der Getriebeeinheit aus Fig. 1,
- Fig. 5: eine alternativ ausgestaltete Getriebeeinheit und
- Fig. 6: eine Schaltlogik der Getriebeeinheit aus Fig. 5.

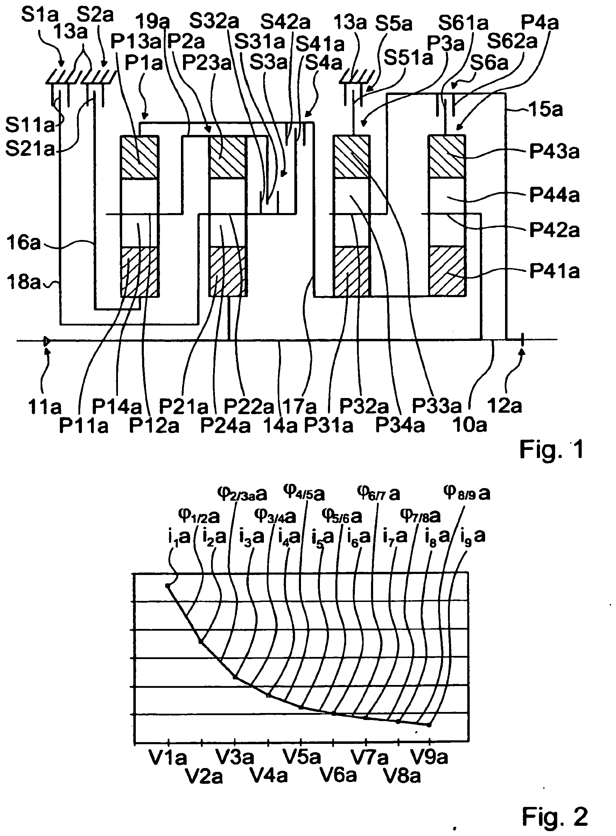

Figur 1 zeigt eine Getriebeeinheit, die als eine Kraftfahrzeuggetriebeeinheit ausgestaltet ist. Die Getriebeeinheit weist vier Planetenradgetriebe P1 a, P2a, P3a, P4a auf. Das erste Planetenradgetriebe P1a, das zweite Planetenradgetriebe P2a, das dritte Planetenradgetriebe P3a und das vierte Planetenradgetriebe P4a sind hintereinander entlang einer Hauptrotationsachse 10a angeordnet. Sämtliche Planetenradgetriebe P1a, P2a, P3a, P4a der Getriebeeinheit weisen einen Einfachplanetenradsatz auf. Die Getriebeeinheit weist sechs Koppeleinheiten S1 a, S2a, S3a, S4a, S5a, S6a auf. Diese sind dazu vorgesehen, genau neun Vorwärtsgetriebegänge V1a, V2a, V3a, V4a, V5a, V6a, V7a, V8a, V9a zu schalten. Jedoch kann die Getriebeeinheit auch mit nur acht Vorwärtsgetriebegängen betrieben werden, beispielsweise dadurch, dass der erste Vorwärtsgetriebegang V1a oder der neunte Vorwärtsgetriebegang V9a nicht geschaltet wird.

Die Getriebeeinheit ist dazu vorgesehen, eine nicht näher dargestellte Antriebsmaschine eines Kraftfahrzeugs mit nicht näher dargestellten Antriebsrädern des Kraftfahrzeugs zu verbinden. Mittels der Getriebeeinheit kann ein Übersetzungsverhältnis zwischen der Antriebsmaschine und den Antriebsrädern eingestellt werden. Die Getriebeeinheit kann mit einem Hybridantriebsmodul verbunden werden, mittels dem das Antriebsmoment verändert werden kann. Weiter kann mittels des Hybridantriebsmoduls und der Getriebeeinheit ein CVT realisiert werden, wodurch eine Getriebeeinheit realisiert werden kann, deren Übersetzungsverhältnis zumindest in Teilbereichen stufenlos eingestellt werden kann.

Die Getriebeeinheit weist eine Antriebseinheit 11 a auf, die dazu vorgesehen ist, ein Antriebsmoment in die Getriebeeinheit einzuleiten. Der Antriebseinheit 11 a kann ein nicht näher dargestelltes Modul vorgeschaltet sein, das insbesondere dazu vorgesehen sein soll, eine Anfahrfunktionalität bereitzustellen. Als ein vorgeschaltetes Modul ist beispielsweise ein Wandler oder eine nasse Anfahrkupplung denkbar. Grundsätzlich kann das zum Anfahren vorgesehene Modul aber auch in die Getriebeeinheit integriert sein oder beispielsweise eine der Koppeleinheiten S1a, S2a, S3a, S4a, S5a, S6a zum Anfahren verwendet werden.

Weiter weist die Getriebeeinheit eine Abtriebseinheit 12a auf, die dazu vorgesehen ist, ein Antriebsmoment aus der Getriebeeinheit auszuleiten. Die Abtriebseinheit 12a ist dazu vorgesehen, mit Antriebsrädern des Kraftfahrzeugs verbunden zu werden. Der Abtriebseinheit 12a kann ein nicht näher dargestelltes Modul nachgeschaltet sein, mittels dem das aus der Getriebeeinheit ausgeleitete Moment auf die Antriebsräder verteilt werden kann, wie beispielsweise ein Planetenradgetriebe, das für einen Drehzahlausgleich zwischen den Antriebsrädern vorgesehen ist, oder eine Allradantriebseinheit, die das Antriebsmoment auf zwei verschiedene Antriebsachsen verteilt. Die Antriebseinheit 11 a und die Abtriebseinheit 12a können grundsätzlich beliebig zueinander angeordnet sein. Dabei ist insbesondere eine koaxiale Anordnung auf gegenüberliegenden Seiten der Getriebeeinheit vorteilhaft. Aber auch eine Anordnung auf der gleichen Seite der Getriebeeinheit ist denkbar.

Das erste Planetenradgetriebe P1 a ist eingangsseitig angeordnet. Das erste Planetenradgetriebe P1 a weist einen Einfachplanetenradsatz auf. Der Einfachplanetenradsatz umfasst ein erstes Sonnenrad P11 a, ein erstes Hohlrad P13a und einen ersten Planetenradträger P12a. Der Planetenradträger P12a führt Planetenräder P14a auf einer Kreisbahn. Die Planetenräder P14a kämmen mit dem Sonnenrad P11a und mit dem Hohlrad P13a. Die Planetenräder P14a sind drehbar auf dem Planetenradträger P12a gelagert. Das erste Planetenradgetriebe P1a weist zwischen dem Sonnenrad P11a und dem Hohlrad P13a bei fixiertem Planetenradträger P12a ein Standübersetzungsverhältnis von -1,970 auf.

Das zweite Planetenradgetriebe P2a ist mittig eingangsseitig angeordnet. Das zweite Planetenradgetriebe P2a weist einen Einfachplanetenradsatz auf. Der Einfachplanetenradsatz umfasst ein zweites Sonnenrad P21a, ein zweites Hohlrad P23a und einen zweiten Planetenradträger P22a. Der Planetenradträger P22a führt Planetenräder P24a auf einer Kreisbahn. Die Planetenräder P24a kämmen mit dem Sonnenrad P21a und mit dem Hohlrad P23a. Die Planetenräder P24a sind drehbar auf dem Planetenradträger P22a gelagert. Das zweite Planetenradgetriebe P2a weist zwischen dem Sonnenrad P21 a und dem Hohlrad P23a bei fixiertem Planetenradträger P22a ein Standübersetzungsverhältnis von -1,658 auf.

Das dritte Planetenradgetriebe P3a ist mittig ausgangsseitig angeordnet. Das dritte Planetenradgetriebe P3a weist einen Einfachplanetenradsatz auf. Der Einfachplanetenradsatz umfasst ein drittes Sonnenrad P31 a, ein drittes Hohlrad P33a und einen dritten Planetenradträger P32a. Der Planetenradträger P32a führt Planetenräder P34a auf einer Kreisbahn. Die Planetenräder P34a kämmen mit dem Sonnenrad P31a und mit dem Hohlrad P33a. Die Planetenräder P34a sind drehbar auf dem Planetenradträger P32a gelagert. Das dritte Planetenradgetriebe P3a weist zwischen dem Sonnenrad P31a und dem Hohlrad P33a bei fixiertem Planetenradträger P32a ein Standübersetzungsverhältnis von -2,548 auf.

Das vierte Planetenradgetriebe P4a ist ausgangsseitig angeordnet. Das vierte Planetenradgetriebe P4a weist einen Einfachplanetenradsatz auf. Der Einfachplanetenradsatz umfasst ein viertes Sonnenrad P41a, ein viertes Hohlrad P43a und einen vierten Planetenradträger P42a. Der Planetenradträger P42a führt Planetenräder P44a auf einer Kreisbahn. Die Planetenräder P44a kämmen mit dem Sonnenrad P41a und mit dem Hohlrad P43a. Die Planetenräder P44a sind drehbar auf dem Planetenradträger P42a gelagert. Das vierte Planetenradgetriebe P4a weist zwischen dem Sonnenrad P41 a und dem Hohlrad P43a bei fixiertem Planetenradträger P42a ein Standübersetzungsverhältnis von - 2,648 auf.

Die drei Koppeleinheiten S3a, S4a, S6a sind als Kupplungseinheiten ausgebildet. Sie weisen jeweils ein erstes drehbares Kopplungselement S31 a, S41 a, S61 a und ein zweites drehbares Kopplungselement S32a, S42a, S62a auf. Die drei Koppeleinheiten S3a, S4a, S6a sind jeweils dazu vorgesehen, ihre beiden Kopplungselemente S31a, S32a, S41a, S42a, S61 a, S62a drehfest miteinander zu verbinden.

Die drei Koppeleinheiten S1 a, S2a, S5a sind als Bremseinheiten ausgebildet und weisen jeweils nur ein Kopplungselement S11a, S21 a, S51 a auf. Die Koppeleinheiten S1a, S2a, S5a sind jeweils dazu vorgesehen, ihr Kopplungselement S11a, S21 a, S51a drehfest mit einem Getriebegehäuse 13a zu verbinden.

Die Koppeleinheiten S1a, S2a, S5a, die als Bremseinheiten ausgeführt sind, sind außenliegend ausgeführt. Die Koppeleinheiten S3a, S4a, S6a, die als Kupplungseinheiten ausgeführt sind, sind innenliegend ausgeführt. Die Koppeleinheiten S1a, S2a, S3a, S4a, S6a sind als Lamellenpakete ausgeführt. Die Koppeleinheit S5a ist als eine Klauenkoppeleinheit ausgeführt. Sie weist eine nicht näher dargestellte Synchronisiereinheit auf, auf die grundsätzlich auch verzichtet werden kann. Jedoch kann die Koppeleinheit S5a ebenso als Lamellenpaket ausgeführt sein. Die Koppeleinheiten S1a, S2a sind in axialer Richtung eingangsseitig von dem ersten Planetenradgetriebe P1a angeordnet. Die Koppeleinheiten S3a, S4a sind in axialer Richtung zwischen dem zweiten Planetenradgetriebe P2a und dem dritten Planetenradgetriebe P3a angeordnet. Die Koppeleinheit S5a ist in axialer Richtung in Höhe des dritten Planetenradgetriebes P3a angeordnet. Die Koppeleinheit S6a ist in axialer Richtung in Höhe des vierten Planetenradgetriebes P4a angeordnet.

Die Antriebseinheit 11 a ist mittels einer Antriebswelle 14a, die an die Antriebseinheit 11a anschließt, drehfest mit dem zweiten Sonnenrad P21a und dem vierten Planetenradträger P42a verbunden. Mittels einer Verbindungswelle 16a sind das erste Sonnenrad P11a und das Kopplungselement S21 a der zweiten Koppeleinheit S2a drehfest miteinander verbunden. Mittels einer Verbindungswelle 17a sind das erste Hohlrad P13a, das Kopplungselement S42a der vierten Koppeleinheit S4a, das dritte Sonnenrad P31 a und das vierte Sonnenrad P41 a drehfest miteinander verbunden. Mittels einer Verbindungswelle 18a sind das Kopplungselement S11a der ersten Koppeleinheit S1a, der zweite Planetenradträger P22a, das Kopplungselement S32a der dritten Koppeleinheit S3a und das Kopplungselement S41 a der vierten Koppeleinheit S4a drehfest miteinander verbunden. Mittels einer Verbindungswelle 19a sind der erste Planetenradträger P12a, das zweite Hohlrad P23a und das Kopplungselement S31a der dritten Koppeleinheit S3a drehfest miteinander verbunden. Das dritte Hohlrad P33a ist direkt drehfest mit dem Kopplungselement S51 a der fünften Koppeleinheit S5a verbunden. Das vierte Hohlrad P43a ist direkt drehfest mit dem Kopplungselement S61a der sechsten Koppeleinheit S6a verbunden. Die Abtriebseinheit 12a ist mittels einer Abtriebswelle 15a drehfest mit dem dritten Planetenradträger P32a und dem Kopplungselement S62a der sechsten Koppeleinheit S6a verbunden.

Die Antriebswelle 14a, die mit der Antriebseinheit 11a verbunden ist, durchsetzt die vier Sonnenräder P11a, P21a, P31 a, P41 a. Das zweite Hohlrad P23a ist direkt an die Antriebswelle 14a angebunden. Zur Anbindung des vierten Planetenradträgers P42a ist sie axial und radial zwischen dem vierten Planetenradgetriebe P4a und der Abtriebswelle 15a hindurchgeführt. Die Verbindungswelle 16a ist axial eingangsseitig von dem ersten Planetenradgetriebe P1a radial nach außen geführt. Die Verbindungswelle 17a umgibt das zweite Planetenradgetriebe P2a. Zur Anbindung des dritten Sonnenrads P31a und des vierten Sonnenrad P41 a ist sie radial und axial zwischen der Koppeleinheit S4a und dem dritten Planetenradgetriebe P3a nach innen geführt. Die Verbindungswelle 18a ist eingangsseitig von der Verbindungswelle 16a nach außen geführt. Die Verbindungswelle 18a begrenzt die Getriebeeinheit eingangsseitig. Weiter durchsetzt sie das erste Sonnenrad P11 a und ist zur Anbindung des zweiten Planetenradträgers P22a radial und axial zwischen den Planetenradgetrieben P1a, P2a nach außen geführt. Zur Anbindung des Kopplungselements S42a durchsetzt sie das zweite Planetenradgetriebe P2a und ist radial und axial zwischen den Verbindungswellen 17a, 19a nach außen geführt. Die Verbindungswelle 19a ist radial und axial zwischen dem ersten Planetenradgetriebe P1 a und dem zweiten Planetenradgetriebe P2a nach außen geführt. Ausgangsseitig von dem zweiten Planetenradgetriebe P2a schließt die Verbindungswelle 19a das Kopplungselement S31 a an die Koppeleinheit S3a an. Die Abtriebswelle 15a ist axial und radial zwischen dem dritten Planetenradgetriebe P3a und dem vierten Planetenradgetriebe P4a nach außen geführt. Sie umgibt das vierte Planetenradgetriebe P4a und begrenzt die Getriebeeinheit ausgangsseitig.

Mittels der Getriebeeinheit sind unterschiedliche Hybridantriebsmodule kombinierbar. Zur Realisierung eines Starter-Generators kann eine erste Antriebsmaschine des Hybridantriebsmoduls an die Antriebseinheit 11a bzw. die Antriebswelle 14a angebunden werden. Zur Realisierung eines CVT kann zusätzlich eine weitere Antriebsmaschine des Hybridantriebsmoduls an eine vorteilhafte Welle des Getriebes angebunden werden, wie beispielsweise an die Verbindungswelle 17a, die drehfest mit dem dritten Sonnenrad P31a verbunden ist.

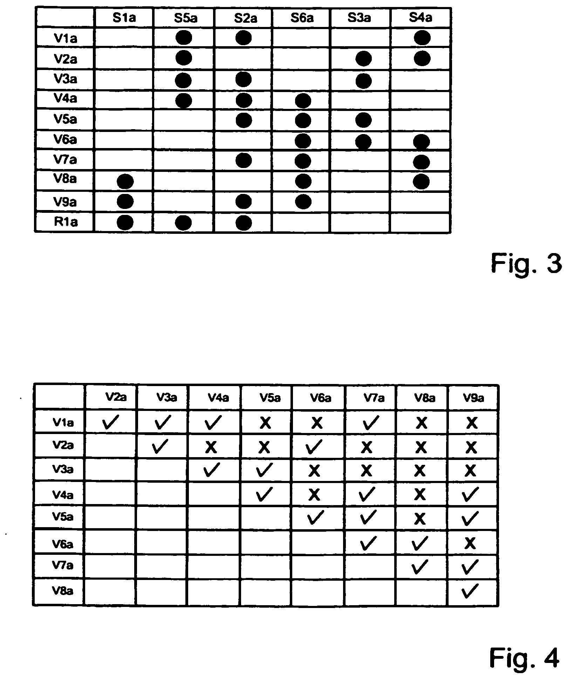

Die Vorwärtsgetriebegänge V1a-V9a werden mittels der Koppeleinheiten S1a, S2a, S3a, S4a, S5a, S6a geschaltet (vgl. Figur 3). In den im Folgenden beschriebenen Vorwärtsgetriebegängen V1a-V9a sind jeweils höchstens drei der Koppeleinheiten S1a, S2a, S3a, S4a, S5a, S6a geschlossen, während die restlichen Koppeleinheiten S1a, S2a, S3a, S4a, S5a, S6a geöffnet sind. Bei einem Schaltvorgang von einem der Vorwärtsgetriebegänge V1a-V9a in einen benachbarten Vorwärtsgetriebegang V1a-V9a werden jeweils höchstens zwei der Koppeleinheiten S1a, S2a, S3a, S4a, S5a, S6a verändert. Bei jedem Schaltvorgang von einem der Vorwärtsgetriebegänge V1a-V9a in einen benachbarten Vorwärtsgetriebegang V1a-V9a bleiben jeweils zwei bereits geschlossene Koppeleinheiten S1a, S2a, S3a, S4a, S5a, S6a geschlossen.

Mittels der Koppeleinheit S3a können das zweite Hohlrad P23a und der zweite Planetenradträger P22a drehfest miteinander verbunden werden, wodurch mittels der Koppeleinheit S3a das zweite Planetenradgetriebe P2a verblockt werden kann. Mittels der Koppeleinheiten S3a, S4a können der erste Planetenradträger P12a und das zweite Hohlrad P23a sowie das erste Hohlrad P13a und der zweite Planetenradträger P22a drehfest miteinander verbunden werden. Da in diesem Fall das zweite Planetenradgetriebe P2a verblockt ist, ist dadurch das erste Planetenradgetriebe P1a ebenfalls verblockt und drehfest mit dem zweiten Planetenradgetriebe P2a verbunden.

Der erste Vorwärtsgetriebegang V1a weist in diesem Ausführungsbeispiel zwischen der Antriebseinheit 11a und der Abtriebseinheit 12a ein Übersetzungsverhältnis i₁a von 5,525 auf. Der erste Vorwärtsgetriebegang V1a wird gebildet, indem die drei Koppeleinheiten S2a, S4a, S5a geschlossen werden. Die Koppeleinheit S2a verbindet das erste Sonnenrad P11 a drehfest mit dem Getriebegehäuse 13a. Die Koppeleinheit S4a verbindet den zweiten Planetenradträger P22a drehfest mit dem ersten Hohlrad P13a und dem dritten Sonnenrad P31a. Die Koppeleinheit S5a verbindet das dritte Hohlrad P33a drehfest mit dem Getriebegehäuse 13a.

Das zweite Sonnenrad P21a rotiert mit einer gleichen Drehzahl wie die Antriebseinheit 11 a. Der zweite Planetenradträger P22a rotiert mit einer gleichen Drehzahl wie das erste Hohlrad P13a. Das zweite Hohlrad P23a rotiert mit einer gleichen Drehzahl wie der erste Planetenradträger P12a. Da das erste Sonnenrad P11a fixiert ist, ist ein Drehzahlverhältnis zwischen dem ersten Planetenradträger P12a und dem ersten Sonnenrad P11a mittels des Standübersetzungsverhältnisses des ersten Planetenradgetriebes P1 a definiert, wodurch auch ein Drehzahlverhältnis zwischen dem zweiten Hohlrad P23a und dem zweiten Planetenradträger P22a definiert ist. Eine Drehzahl des zweiten Planetenradträgers P22a ist somit durch die Drehzahl des zweiten Sonnenrads P21 a und das Standübersetzungsverhältnis des ersten Planetenradgetriebes P1a definiert. Das dritte Sonnenrad P31 a weist die gleiche Drehzahl auf wie der zweite Planetenradträger P22a. Da das dritte Hohlrad P33a fixiert ist, ist eine Drehzahl des dritten Planetenradträgers P32a durch die Drehzahl des dritten Sonnenrads P31a und das Standübersetzungsverhältnis des dritten Planetenradgetriebes P3a definiert. Die Abtriebseinheit 12a weist die gleiche Drehzahl auf wie der zweite Planetenradträger P22a. Ein Kraftfluss für den ersten Getriebegang V1a wird über das zweite Planetenradgetriebe P2a eingeleitet und über die Koppeleinheit S4a aufgesplittet. Ein Teil des Kraftflusses wird über das erste Planetenradgetriebe P1a auf das zweite Planetenradgetriebe P2a zurückgekoppelt. Ein weiterer Teil des Kraftflusses wird über das dritte Planetenradgetriebe P3a ausgeleitet.

Der zweite Vorwärtsgetriebegang V2a weist in diesem Ausführungsbeispiel zwischen der Antriebseinheit 11a und der Abtriebseinheit 12a ein Übersetzungsverhältnis i₂a von 3,548 auf. Der zweite Vorwärtsgetriebegang V2a wird gebildet, indem die Koppeleinheiten S3a, S4a, S5a geschlossen werden. Die Koppeleinheit S3a verbindet den zweiten Planetenradträger P22a drehfest mit dem zweiten Hohlrad P23a und dem ersten Planetenradträger P12a. Die Koppeleinheit S4a verbindet den zweiten Planetenradträger P22a drehfest mit dem dritten Sonnenrad P31a. Die Koppeleinheit S5a verbindet das dritte Hohlrad P33a drehfest mit dem Getriebegehäuse 13a.

Da der zweite Planetenradträger P22a drehfest mit dem zweiten Hohlrad P23a verbunden ist, ist das zweite Planetenradgetriebe P2a verblockt. Der zweite Planetenradträger P22a weist somit eine gleiche Drehzahl auf wie die Antriebseinheit 11 a. Da der zweite Planetenradträger P22a drehfest mit dem dritten Sonnenrad P31a verbunden ist, weist auch das dritte Sonnenrad P31 a die gleiche Drehzahl wie die Antriebseinheit 11a auf. Das dritte Hohlrad P33a ist fixiert, wodurch eine Drehzahl des dritten Planetenradträgers P32a durch die Drehzahl der Antriebseinheit 11a und das Standübersetzungsverhältnis des dritten Planetenradgetriebes P3a definiert ist. Die Abtriebseinheit 12a weist die gleiche Drehzahl auf wie der dritte Planetenradträger P32a. Ein Kraftfluss für den zweiten Vorwärtsgetriebegang V2a wird über das zweite Planetenradgetriebe P2a eingeleitet und über das dritte Planetenradgetriebe P3a ausgeleitet.

Der dritte Vorwärtsgetriebegang V3a weist in diesem Ausführungsbeispiel zwischen der Antriebseinheit 11a und der Abtriebseinheit 12a ein Übersetzungsverhältnis i₃a von 2,355 auf. Der dritte Vorwärtsgetriebegang V3a wird gebildet, indem die Koppeleinheiten S2a, S3a, S5a geschlossen werden. Die Koppeleinheit S2a verbindet das erste Sonnenrad P11 a drehfest mit dem Getriebegehäuse 13a. Die Koppeleinheit S3a verbindet den zweiten Planetenradträger P22a drehfest mit dem zweiten Hohlrad P23a und dem ersten Planetenradträger P12a. Die Koppeleinheit S5a verbindet das dritte Hohlrad P33a drehfest mit dem Getriebegehäuse 13a.

Das zweite Sonnenrad P21 a weist eine gleiche Drehzahl auf wie die Antriebseinheit 11 a. Da das zweite Planetenradgetriebe P2a verblockt ist, weist auch der erste Planetenradträger P12a, der drehfest mit dem zweiten Hohlrad P23a verbunden ist, die gleiche Drehzahl auf wie die Antriebseinheit 11 a. Da das erste Sonnenrad P11 a fixiert ist, ist eine Drehzahl des ersten Hohlrads P13a durch die Drehzahl der Antriebseinheit 11a und das Standübersetzungsverhältnis des ersten Planetenradgetriebes P1 a definiert. Das dritte Sonnenrad P31a ist drehfest mit dem ersten Hohlrad P13a verbunden und weist somit die gleiche Drehzahl auf wie das erste Hohlrad P13a. Das dritte Hohlrad P33a ist fixiert, wodurch eine Drehzahl des dritten Planetenradträgers P32a, der drehfest mit der Abtriebseinheit P11a verbunden ist, durch das Standübersetzungsverhältnis des dritten Planetenradgetriebes P3a und die Drehzahl des dritten Sonnenrads P31 a definiert ist. Ein Kraftfluss für den dritten Vorwärtsgetriebegang V3a wird über das zweite Planetenradgetriebe P2a eingeleitet, über das erste Planetenradgetriebe P1 a weitergeleitet und über das dritte Planetenradgetriebe P3a wieder ausgeleitet.

Der vierte Vorwärtsgetriebegang V4a weist in diesem Ausführungsbeispiel zwischen der Antriebseinheit 11a und der Abtriebseinheit 12a ein Übersetzungsverhältnis i₄a von 1,698 auf. Der vierte Vorwärtsgetriebegang V4a wird gebildet, indem die Koppeleinheiten S2a, S5a, S6a geschlossen werden. Die Koppeleinheit S2a verbindet das erste Sonnenrad P11a drehfest mit dem Getriebegehäuse 13a. Die Koppeleinheit S5a verbindet das dritte Hohlrad P33a drehfest mit dem Getriebegehäuse 13a. Die Koppeleinheit S6a verbindet das vierte Hohlrad P43a drehfest mit der Abtriebseinheit 12a.

Der vierte Planetenradträger P42a rotiert mit einer gleichen Drehzahl wie die Antriebseinheit 11a. Das vierte Sonnenrad P41 a ist drehfest mit dem dritten Sonnenrad P31 a verbunden. Das vierte Hohlrad P43a ist drehfest mit dem dritten Planetenradträger P32a verbunden. Da das dritte Hohlrad P33a fixiert ist, ist ein Drehzahlverhältnis zwischen dem dritten Sonnenrad P31a und dem dritten Planetenradträger P32a, das gleich ist wie ein Drehzahlverhältnis zwischen dem vierten Sonnenrad P41a und dem vierten Hohlrad P43a, mittels des Standübersetzungsverhältnisses des dritten Planetenradgetriebes P3a definiert. Eine Drehzahl der Abtriebseinheit 12a, die gleich ist wie die Drehzahl des vierten Hohlrads P43a, ist somit durch das Standübersetzungsverhältnis des vierten Planetenradgetriebes P4a, das Drehzahlverhältnis zwischen dem vierten Sonnenrad P41 a und dem vierten Hohlrad P43a und die Drehzahl der Antriebseinheit 11a definiert. Ein Kraftfluss für den vierten Vonrvärtsgetriebegang V4a wird über das vierte Planetenradgetriebe P4a eingeleitet und über die Koppeleinheit S6a aufgesplittet. Ein Teil des Kraftflusses ist über das dritte Planetenradgetriebe P3a mit dem vierten Planetenradgetriebe P4a rückgekoppelt. Ein weiterer Teil des Kraftflusses wird direkt ausgeleitet.

Der fünfte Vorwärtsgetriebegang V5a weist in diesem Ausführungsbeispiel zwischen der Antriebseinheit 11a und der Abtriebseinheit 12a ein Übersetzungsverhältnis i₅a von 1,236 auf. Der fünfte Vorwärtsgetriebegang V5a wird gebildet, indem die Koppeleinheiten S2a, S3a, S6a geschlossen werden. Die Koppeleinheit S2a verbindet das erste Sonnenrad P11a drehfest mit dem Getriebegehäuse 13a. Die Koppeleinheit S3a verbindet den zweiten Planetenradträger P22a drehfest mit dem zweiten Hohlrad P23a und dem ersten Planetenradträger P12a. Die Koppeleinheit S6a verbindet das vierte Hohlrad P43a drehfest mit der Abtriebseinheit 12a.

Das zweite Sonnenrad P21 a weist eine gleiche Drehzahl auf wie die Antriebseinheit 11 a. Da der zweite Planetenradträger P22a drehfest mit dem zweiten Hohlrad P23a verbunden ist, ist das zweite Planetenradgetriebe P2a verblockt, wodurch auch der zweite Planetenradträger P22a und das zweite Hohlrad P23a die gleiche Drehzahl aufweisen wie die Antriebseinheit 11a. Das erste Sonnenrad P11a ist fixiert. Der erste Planetenradträger P12a, der drehfest mit dem zweiten Hohlrad P23a verbunden ist, weist die gleiche Drehzahl auf wie die Antriebseinheit 11a. Eine Drehzahl des ersten Hohlrads P13a ist damit durch das Standübersetzungsverhältnis des ersten Planetenradgetriebes P1a und die Drehzahl der Antriebseinheit 11a definiert. Der vierte Planetenradträger P42a weist ebenfalls die gleiche Drehzahl wie die Antriebseinheit 11a auf. Das vierte Sonnenrad P41 a weist die gleiche Drehzahl auf wie das erste Hohlrad P13a. Eine Drehzahl des vierten Hohlrads P43a, das drehfest mit der Abtriebseinheit 12a verbunden ist, ist mittels der Drehzahl der Antriebseinheit 11a, der Drehzahl des vierten Sonnenrads P41 a und des Standübersetzungsverhältnisses des vierten Planetenradgetriebes P4a definiert. Ein Kraftfluss für den fünften Getriebegang V5a wird über das vierte Planetenradgetriebe P4a eingeleitet und aufgesplittet. Ein Teil des Kraftflusses ist über das erste Planetenradgetriebe P1a und das zweite Planetenradgetriebe P2a mit der Antriebseinheit 11a rückgekoppelt. Ein weiterer Teil des Kraftflusses wird über das vierte Planetenradgetriebe P4a wieder ausgeleitet.

Der sechste Vorwärtsgetriebegang V6a weist in diesem Ausführungsbeispiel zwischen der Antriebseinheit 11a und der Abtriebseinheit 12a ein Übersetzungsverhältnis i₆a von 1,000 auf. Er ist als ein Direktgang ausgebildet. Der sechste Vorwärtsgetriebegang V6a wird gebildet, indem die Koppeleinheiten S3a, S4a, S6a geschlossen werden. Die Koppeleinheit S3a verbindet den zweiten Planetenradträger P22a drehfest mit dem zweiten Hohlrad P23a und dem ersten Planetenradträger P12a. Die Koppeleinheit S4a verbindet den zweiten Planetenradträger P22a drehfest mit dem vierten Sonnenrad P41a. Die Koppeleinheit S6a verbindet das vierte Hohlrad P43a drehfest mit der Abtriebseinheit 12a.

Da der zweite Planetenradträger P22a drehfest mit dem zweiten Hohlrad P23a verbunden ist, ist das zweite Planetenradgetriebe P2a verblockt. Da das zweite Sonnenrad P21 a eine gleiche Drehzahl aufweist wie die Antriebseinheit 11a, weisen auch der zweite Planetenradträger P22a und das vierte Sonnenrad P41 a die gleiche Drehzahl auf wie die Antriebseinheit 11a. Der vierte Planetenradträger P42a, der drehfest mit der Antriebseinheit 11a verbunden ist, weist ebenfalls die gleiche Drehzahl auf wie die Antriebseinheit 11a, wodurch auch das vierte Hohlrad P43a die gleiche Drehzahl aufweist wie die Antriebseinheit 11a. Ein Kraftfluss für den sechsten Getriebegang V6a wird über das vierte Planetenradgetriebe P4a eingeleitet und aufgesplittet. Ein Teil des Kraftflusses ist über das zweite Planetenradgetriebe P2a mit der Antriebseinheit 11a rückgekoppelt. Ein weiterer Teil des Kraftflusses wird über das vierte Planetenradgetriebe P4a wieder ausgeleitet.

Der siebte Vorwärtsgetriebegang V7a weist in diesem Ausführungsbeispiel zwischen der Antriebseinheit 11a und der Abtriebseinheit 12a ein Übersetzungsverhältnis i₇a von 0,881 auf. Der siebte Vorwärtsgetriebegang V7a wird gebildet, indem die Koppeleinheiten S2a, S4a, S6a geschlossen werden. Die Koppeleinheit S2a verbindet das erste Sonnenrad P11a drehfest mit dem Getriebegehäuse 13a. Die Koppeleinheit S4a verbindet den zweiten Planetenradträger P22a drehfest mit vierten Sonnenrad P41 a. Die Koppeleinheit S6a verbindet das vierte Hohlrad P43a drehfest mit der Abtriebseinheit 12a.

Da das erste Sonnenrad P11a fixiert ist, ist ein Drehzahlverhältnis zwischen dem ersten Planetenradträger P12a und dem ersten Hohlrad P13a, und somit auch zwischen dem zweiten Hohlrad P23a und dem zweiten Planetenradträger P22a, durch das Standübersetzungsverhältnis des ersten Planetenradgetriebes P1a definiert. Eine Drehzahl des vierten Sonnenrads P41a, die gleich ist wie eine Drehzahl des zweiten Hohlrads P23a, ist somit durch das Drehzahlverhältnis zwischen dem ersten Planetenradträger P12a und dem ersten Hohlrad P13a sowie eine Drehzahl derAntriebseinheit 11a definiert. Eine Drehzahl des vierten Hohlrads P43a ist durch die Drehzahl des vierten Sonnenrads P41a, die Drehzahl der Antriebseinheit 11a und das Standübersetzungsverhältnis des vierten Planetenradgetriebes P4a definiert. Ein Kraftfluss für den siebten Vorwärtsgetriebegang V7a wird über das vierte Planetenradgetriebe P4a eingeleitet und aufgesplittet. Ein Teil des Kraftflusses ist über das zweite Planetenradgetriebe P2a und das erste Planetenradgetriebe P1 a mit der Antriebseinheit 11a rückgekoppelt. Ein weiterer Teil des Kraftflusses wird über das vierte Planetenradgetriebe P4a ausgeleitet.

Der achte Vorwärtsgetriebegang V8a weist in diesem Ausführungsbeispiel zwischen der Antriebseinheit 11a und der Abtriebseinheit 12a ein Übersetzungsverhältnis i₈a von 0,726 auf. Der achte Vorwärtsgetriebegang V8a wird gebildet, indem die Koppeleinheiten S1a, S4a, S6a geschlossen werden. Die Koppeleinheit S1a verbindet den zweiten Planetenradträger P22a drehfest mit dem Getriebegehäuse 13a. Die Koppeleinheit S4a verbindet das vierte Sonnenrad P41a drehfest mit dem zweiten Planetenradträger P22a und damit drehfest mit dem Getriebegehäuse 13a. Die Koppeleinheit S6a verbindet das vierte Hohlrad P43a drehfest mit der Abtriebseinheit 12a.

Das vierte Sonnenrad P41 a ist fixiert. Der vierte Planetenradträger P42a, der drehfest mit der Antriebseinheit 11a verbunden ist, weist eine gleiche Drehzahl auf wie die Antriebseinheit 11 a. Eine Drehzahl des vierten Hohlrads P43a und damit eine Drehzahl der Abtriebseinheit 12a sind durch die Drehzahl der Antriebseinheit 11 a und das Standübersetzungsverhältnis des vierten Planetenradgetriebes P4a definiert. Ein Kraftfluss für den achten Vorwärtsgetriebegang V8a wird über das vierte Planetenradgetriebe P4a eingeleitet und ausgeleitet.

Der neunte Vorwärtsgetriebegang V9a weist in diesem Ausführungsbeispiel zwischen der Antriebseinheit 11a und der Abtriebseinheit 12a ein Übersetzungsverhältnis i₉a von 0,581 auf. Der neunte Vorwärtsgetriebegang V9a wird gebildet, indem die Koppeleinheiten S1a, S2a, S6a geschlossen werden. Die Koppeleinheit S1a verbindet den zweiten Planetenradträger P22a drehfest mit dem Getriebegehäuse 13a. Die Koppeleinheit S2a verbindet das erste Sonnenrad P11 a drehfest mit dem Getriebegehäuse 13a. Die Koppeleinheit S6a verbindet das vierte Hohlrad P43a drehfest mit der Abtriebseinheit 12a.

Der zweite Planetenradträger P22a ist fixiert. Das zweite Sonnenrad P21 a weist eine gleiche Drehzahl auf wie die Antriebseinheit 11 a. Eine Drehzahl des zweiten Hohlrads P23a ist durch die Drehzahl der Antriebseinheit 11a und das Standübersetzungsverhältnis des zweiten Planetenradgetriebes P2a definiert. Der erste Planetenradträger P12a weist die gleiche Drehzahl auf wie das zweite Hohlrad P23a. Das erste Sonnenrad P11a ist fixiert. Eine Drehzahl des ersten Hohlrads P13a ist durch die Drehzahl des zweiten Hohlrads P23a und das Standübersetzungsverhältnis des ersten Planetenradgetriebes P1 a definiert. Die Drehzahl des vierten Sonnenrads P41 a ist gleich wie die Drehzahl des ersten Hohlrads P13a. Der vierte Planetenradträger P42a weist eine gleiche Drehzahl auf wie die Antriebseinheit 11 a. Eine Drehzahl des drehfest mit der Abtriebseinheit 12a verbundnen vierten Hohlrads P43a ist durch die Drehzahl des zweiten Hohlrads P23a, das Standübersetzungsverhältnis des vierten Planetenradgetriebes P4a und die Drehzahl der Antriebseinheit 11a definiert. Ein über die Antriebseinheit 11a eingeleiteter Kraftfluss für den neunten Vorwärtsgetriebegang V9a wird vor dem ersten Planetenradgetriebe P1 a aufgesplittet. Ein erster Teil des Kraftflusses wird über das zweite Planetenradgetriebe P2a und das erste Planetenradgetriebe P1a an das vierte Planetenradgetriebe P4a geleitet. Ein zweiter Teil des Kraftflusses wird direkt an das vierte Planetenradgetriebe P4a geleitet. Mittels des vierten Planetenradgetriebes P4a wird der Kraftfluss wieder kombiniert und ausgeleitet.

Der Rückwärtsgetriebegang R1a weist in diesem Ausführungsbeispiel zwischen der Antriebseinheit 11a und der Abtriebseinheit 12a ein Übersetrungsverhältnis i_{R}a von -3,905 auf. Der Rückwärtsgetriebegang R1a wird gebildet, indem die Koppeleinheiten S1a, S2a, S5a geschlossen werden. Die Koppeleinheit S1a verbindet den zweiten Planetenradträger P22a drehfest mit dem Getriebegehäuse 13a. Die Koppeleinheit S2a verbindet das erste Sonnenrad P11a drehfest mit dem Getriebegehäuse 13a. Die Koppeleinheit S5a verbindet das dritte Hohlrad P33a drehfest mit dem Getriebegehäuse 13a.

Der zweite Planetenradträger P22a ist fixiert. Das zweite Sonnenrad P21a weist eine gleiche Drehzahl auf wie die Antriebseinheit 11a. Eine Drehzahl des zweiten Hohlrads P23a ist durch die Drehzahl der Antriebseinheit 11a und das Stand übersetzungsverhältnis des zweiten Planetenradgetriebes P2a definiert. Der erste Planetenradträger P12a weist die gleiche Drehzahl auf wie das zweite Hohlrad P23a. Das erste Sonnenrad P11a ist fixiert. Eine Drehzahl des ersten Hohlrads P13a ist durch die Drehzahl des zweiten Hohlrads P23a und das Standübersetzungsverhältnis des ersten Planetenradgetriebes P1 a definiert. Die Drehzahl des dritten Sonnenrads P31 a ist gleich wie die Drehzahl des ersten Hohlrads P13a. Das dritte Hohlrad P33a ist fixiert. Eine Drehzahl des dritten Planetenradträgers P32a, der drehfest mit der Abtriebseinheit 12a verbunden ist, ist durch die Drehzahl des ersten Hohlrads P13a und das Standübersetzungsverhältnis des dritten Planetenradgetriebes P3a definiert. Ein Kraftfluss für den Rückwärtsgetriebegang R1a wird über das zweite Planetenradgetriebe P2a eingeleitet, über das erste Planetenradgetriebe P1 a an das dritte Planetenradgetriebe P3a weitergeleitet und über das dritte Planetenradgetriebe P3a wieder ausgeleitet.

Ein Stufensprung ϕ_{1/2}a zwischen dem ersten und dem zweiten Vorwärtsgetriebegang V1a, V2a beträgt 1,557. Ein Stufensprung ϕ_{2/3}a zwischen dem zweiten und dem dritten Vorwärtsgetriebegang V2a, V3a beträgt 1,506. Ein Stufensprung ϕ_{3/4}a zwischen dem dritten und dem vierten Vorwärtsgetriebegang V3a, V4a beträgt 1,387. Ein Stufensprung ϕ_{4/5}a zwischen dem vierten und dem fünften Vorwärtsgetriebegang V4a, V5a beträgt 1,374. Ein Stufensprung ϕ_{5/6}a zwischen dem fünften und dem sechsten Vorwärtsgetriebegang V5a, V6a beträgt 1,236. Ein Stufensprung ϕ_{6/7}a zwischen dem sechsten und dem siebten Vorwärtsgetriebegang V6a, V7a beträgt 1,135. Ein Stufensprung ϕ_{7/8}a zwischen dem siebten und dem achten Vorwärtsgetriebegang V7a, V8a beträgt 1,214. Ein Stufensprung ϕ_{8/9}a zwischen dem achten und dem neunten Vorwärtsgetriebegang V8a, V9a beträgt 1,249. Eine Gesamtspreizung der Getriebeeinheit zwischen dem ersten Vorwärtsgetriebegang V1a und dem neunten Vorwärtsgetriebegang V9a beträgt ca. 9,5. Eine Spreizung zwischen dem ersten Vorwärtsgetriebegang V1a und dem achten Vorwärtsgetriebegang V8a beträgt ca. 7,6. Eine Spreizung zwischen dem zweiten Vorwärtsgetriebegang V2a und dem neunten Vorwärtsgetriebegang V9a beträgt ca. 6,1 (vgl. Figur 2). Die Getriebeeinheit ist grundsätzlich auch als ein Acht-Gang-Getriebe einsetzbar.

Ein maximaler Drehzahlfaktor für die Planetenradgetriebe P1 a, P2a, P3a, P4a beträgt in den Vorwärtsgetriebegängen V1a-V9a ca. 2,7. In dem Vorwärtsgetriebegang V9a beträgt ein maximaler Drehzahlfaktor für die Planetenradgetriebe P1 a, P2a, P3a, P4a ca 3,3. Der Drehzahlfaktor für die Planetenradgetriebe P1a, P2a, P3a, P4a beschreibt ein Verhältnis zwischen einer Drehzahl der Antriebseinheit 11a und einer maximalen Drehzahl, die an den Sonnenrädem P11a, P21a, P31a, P41a, den Hohlrädern P13a, P23a, P33a, P43a oder den Planetenradträgern P12a, P22a, P32a, P42a in einem der Vorwärtsgetriebegänge V1a-V9a auftritt. Ein maximaler Drehzahlfaktor für die Planetenräder P14a, P24a, P34a, P44a beträgt in den Vorwärtsgetriebegängen V1a-V8a ca. 3,0 und in dem neunten Vorwärtsgetriebegang V9a ca. 3,3. In dem neunten Vorwärtsgetriebegang V9a kann eine maximale Drehzahl der Antriebseinheit 11a und damit eine Drehzahl der Planetenräder P14a, P24a, P34a, P44a begrenzt werden.

Ein maximaler Drehmomentfaktor beträgt für die Vorwärtsgetriebegänge V1a-V9a ca. 5,5. Der Drehmomentfaktor beschreibt ein Verhältnis zwischen einem Antriebsmoment, das an der Antriebseinheit 11a anliegt, und einem maximalen Drehmoment, das an den Sonnenrädem P11a, P21a, P31a, P41a, den Hohlrädern P13a, P23a, P33a, P43a oder den Planetenradträgern P12a, P22a, P32a, P42a auftritt. Der maximale Drehmomentfaktor für die Vorwärtsgetriebegänge V1a-V9a wird im ersten Vorwärtsgetriebegang V1a erreicht.

Eine Schaltbarkeit der Vorwärtsgetriebegänge V1a-V9a ist in Figur 4 gezeigt. Ausgehend von dem ersten Vorwärtsgetriebegang V1a sind die Vorwärtsgetriebegänge V2a, V3a, V4a, V7a schaltbar. Ausgehend von dem zweiten Vorwärtsgetriebegang V2a sind die Vorwärtsgetriebegänge V1a, V3a, V6a schaltbar. Ausgehend von dem dritten Vorwärtsgetriebegang V3a sind die Vorwärtsgetriebegänge V1a, V2a, V4a, V5a schaltbar. Ausgehend von dem vierten Vorwärtsgetriebegang V4a sind die Vorwärtsgetriebegänge V1a, V3a, V5a, V7a, V9a schaltbar. Ausgehend von dem fünften Vorwärtsgetriebegang V5a sind die Vorwärtsgetriebegänge V3a, V4a, V6a, V7a, V9a schaltbar. Ausgehend von dem sechsten Vorwärtsgetriebegang V6a sind die Vorwärtsgetriebegänge V2a, V5a, V7a, V8a schaltbar. Ausgehend von dem siebten Vorwärtsgetriebegang V7a sind die Vorwärtsgetriebegänge V1a, V4a, V5a, V6a, V8a, V9a schaltbar. Ausgehend von dem achten Vorwärtsgetriebegang V8a sind die Vorwärtsgetriebegänge V6a, V7a, V9a schaltbar. Ausgehend von dem neunten Vorwärtsgetriebegang V9a sind die Vorwärtsgetriebegänge V4a, V5a, V7a, V8a schaltbar.

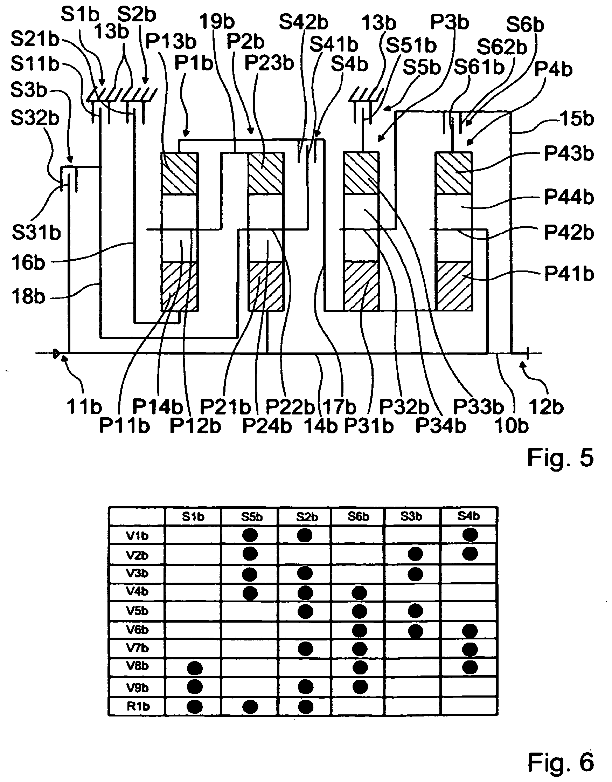

In den Figuren 5 und 6 ist ein weiteres Ausführungsbeispiel der Erfindung gezeigt. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels in den Figuren 5 und 6 ersetzt. Die nachfolgende Beschreibung beschränkt sich im Wesentlichen auf Unterschiede zwischen den Ausführungsbeispielen. Bezüglich gleich bleibender Bauteile, Merkmale und Funktionen kann auf die Beschreibung und/oder die Zeichnungen des Ausführungsbeispiels in den Figuren 1 bis 4 verwiesen werden.

Figur 5 zeigt eine Getriebeeinheit, die als eine Kraftfahrzeuggetriebeeinheit ausgestaltet ist. Die Getriebeeinheit weist vier Planetenradgetriebe P1 b, P2b, P3b, P4b auf. Das erste Planetenradgetriebe P1 b, das zweite Planetenradgetriebe P2b, das dritte Planetenradgetriebe P3b und das vierte Planetenradgetriebe P4b sind hintereinander entlang einer Hauptrotationsachse 10b angeordnet. Die Getriebeeinheit weist sechs Koppeleinheiten S1b, S2b, S3b, S4b, S5b, S6b auf. Diese sind dazu vorgesehen, genau neun Vorwärtsgetriebegänge V1b, V2b, V3b, V4b, V5b, V6b, V7b, V8b, V9b zu schalten. Jedoch kann die Getriebeeinheit auch mit nur acht Vorwärtsgetriebegängen betrieben werden, beispielsweise dadurch, dass der erste Vorwärtsgetriebegang V1 b oder der neunte Vorwärtsgetriebegang V9b nicht geschaltet wird.

Das erste Planetenradgetriebe P1 b ist eingangsseitig angeordnet. Das erste Planetenradgetriebe P1b weist einen Einfachplanetenradsatz auf. Der Einfachplanetenradsatz umfasst ein erstes Sonnenrad P11b, ein erstes Hohlrad P13b und einen ersten Planetenradträger P12b. Das erste Planetenradgetriebe P1 b weist zwischen dem Sonnenrad P11b und dem Hohlrad P13b bei fixiertem Planetenradträger P12b ein Standübersetzungsverhältnis von -1,970 auf.

Das zweite Planetenradgetriebe P2b ist mittig eingangsseitig angeordnet. Das zweite Planetenradgetriebe P2b weist einen Einfachplanetenradsatz auf. Der Einfachplanetenradsatz umfasst ein zweites Sonnenrad P21 b, ein zweites Hohlrad P23b und einen zweiten Planetenradträger P22b. Das zweite Planetenradgetriebe P2b weist zwischen dem Sonnenrad P21 b und dem Hohlrad P23b bei fixiertem Planetenradträger P22b ein Standübersetzungsverhältnis von -1,654 auf.

Das dritte Planetenradgetriebe P3b ist mittig ausgangsseitig angeordnet. Das dritte Planetenradgetriebe P3b weist einen Einfachplanetenradsatz auf. Der Einfachplanetenradsatz umfasst ein drittes Sonnenrad P31b, ein drittes Hohlrad P33b und einen dritten Planetenradträger P32b. Das dritte Planetenradgetriebe P3b weist zwischen dem Sonnenrad P31 b und dem Hohlrad P33b bei fixiertem Planetenradträger P32b ein Standübersetzungsverhältnis von -2,556 auf.

Das vierte Planetenradgetriebe P4b ist ausgangsseitig angeordnet. Das vierte Planetenradgetriebe P4b weist einen Einfachplanetenradsatz auf. Der Einfachplanetenradsatz umfasst ein viertes Sonnenrad P41 b, ein viertes Hohlrad P43b und einen vierten Planetenradträger P42b. Das vierte Planetenradgetriebe P4b weist zwischen dem Sonnenrad P41 b und dem Hohlrad P43b bei fixiertem Planetenradträger P42b ein Standübersetzungsverhältnis von -2,644 auf.

Die drei als Kupplungseinheiten ausgebildeten Koppeleinheiten S3b, S4b, S6b weisen jeweils ein erstes drehbares Kopplungselement S31 b, S41 b, S61 b und ein zweites drehbares Kopplungselement S32b, S42b, S62b auf, die mittels der entsprechenden Kopplungseinheit S3b, S4b, S6b drehfest miteinander verbindbar sind. Die drei als Bremseinheiten ausgebildeten Koppeleinheiten S1b, S2b, S5b weisen jeweils nur ein Kopplungselement S11b, S21b, S51 b auf, das mittels der entsprechenden Koppeleinheiten S1b, S2b, S5b drehfest mit einem Getriebegehäuse 13b verbindbar ist.

Die Koppeleinheiten S1b, S2b, S3b, S5b sind außenliegend ausgeführt. Die Koppeleinheiten S4b, S6b sind innenliegend ausgeführt. Die Koppeleinheiten S1 b, S2b, S3b, S6b sind als Lamellenpakete ausgeführt. Die Koppeleinheit S5b ist als eine Klauenkoppeleinheit ausgeführt. Sie weist eine nicht näher dargestellte Synchronisiereinheit auf, auf die grundsätzlich auch verzichtet werden kann. Jedoch kann die Koppeleinheit S5b ebenso als Lamellenpaket ausgeführt sein. Die Koppeleinheiten S3b, S1b, S2b sind in dieser Reihenfolge in axialer Richtung eingangsseitig von dem ersten Planetenradgetriebe P1 b angeordnet. Die Koppeleinheit S4b ist in axialer Richtung zwischen dem zweiten Planetenradgetriebe P2b und dem dritten Planetenradgetriebe P3b angeordnet. Die Koppeleinheit S5b ist in axialer Richtung in Höhe des dritten Planetenradgetriebes P3b angeordnet. Die Koppeleinheit S6b ist in axialer Richtung in Höhe des vierten Planetenradgetriebes P4b angeordnet.

Die Antriebseinheit 11b ist mittels einer Antriebswelle 14b, die an die Antriebseinheit 11b anschließt, drehfest mit dem zweiten Sonnenrad P21 b, dem vierten Planetenradträger P42b und dem ersten Kopplungselement S31 b der dritten Koppeleinheit S3b verbunden. Mittels einer Verbindungswelle 16b sind das erste Sonnenrad P11b und das Kopplungselement S21 b der zweiten Koppeleinheit S2b drehfest miteinander verbunden. Mittels einer Verbindungswelle 17b sind das erste Hohlrad P13b, das Kopplungselement S42b der vierten Koppeleinheit S4b, das dritte Sonnenrad P31 b und das vierte Sonnenrad P41 b drehfest miteinander verbunden. Mittels einer Verbindungswelle 18b sind das Kopplungselement S32b der dritten Koppeleinheit S3b, das Kopplungselement S 11 b der ersten Koppeleinheit S1b, der zweite Planetenradträger P22b und das Kopplungselement S41 b der vierten Koppeleinheit S4b drehfest miteinander verbunden. Mittels einer Verbindungswelle 19b sind der erste Planetenradträger P12b und das zweite Hohlrad P23b drehfest miteinander verbunden. Das dritte Hohlrad P33b ist direkt drehfest mit dem Kopplungselement S51 b der fünften Koppeleinheit S5b verbunden. Das vierte Hohlrad P43b ist direkt drehfest mit dem Kopplungselement S61 b der sechsten Koppeleinheit S6b verbunden. Die Abtriebseinheit 12b ist mittels einer Abtriebswelle 15b drehfest mit dem dritten Planetenradträger P32b und dem Kopplungselement S62b der sechsten Koppeleinheit S6b verbunden.

Die Antriebswelle 14b, die mit der Antriebseinheit 11 b verbunden ist, durchsetzt das die vier Sonnenräder P11b, P21 b, P31 b, P41 b. Zur Anbindung des Kopplungselements S31 b ist sie axial eingangsseitig nach außen geführt. Die Antriebswelle 14b begrenzt die Getriebeeinheit eingangsseitig. Das zweite Hohlrad P23b ist direkt an die Antriebswelle 14b angebunden. Zur Anbindung des vierten Planetenradträgers P42b ist die Antriebswelle 14b axial und radial zwischen dem vierten Planetenradgetriebe P4b und der Abtriebswelle 15b hindurchgeführt. Die Verbindungswelle 16b ist axial eingangsseitig von dem ersten Planetenradgetriebe P1b radial nach außen geführt. Die Verbindungswelle 17b umgibt das zweite Planetenradgetriebe P2b. Sie ist radial und axial zwischen der Koppeleinheit S4b und dem dritten Planetenradgetriebe P3b nach innen geführt und an das dritte Sonnenrad P31 b und das vierte Sonnenrad P41 b angebunden. Die Verbindungswelle 18a ist radial und axial zwischen der Antriebswelle 14b und der Verbindungswelle 16b nach außen geführt. Weiter durchsetzt sie das erste Sonnenrad P11 b und ist zur Anbindung des zweiten Planetenradträgers P22b radial und axial zwischen den Planetenradgetrieben P1 b, P2b nach außen geführt. Zur Anbindung des Kopplungselements S42b durchsetzt sie das zweite Planetenradgetriebe P2b und ist radial und axial zwischen dem zweiten Planetenradgetriebe P2b und der Verbindungswelle 17b nach außen geführt. Die Verbindungswelle 19b ist zur Verbindung des Planetenradträgers P12b und des Hohlrads P23b radial und axial zwischen dem ersten Planetenradgetriebe P1b und dem zweiten Planetenradgetriebe P2b nach außen geführt. Die Abtriebswelle 15b ist axial und radial zwischen dem dritten Planetenradgetriebe P3b und dem vierten Planetenradgetriebe P4b nach außen geführt. Sie umgibt das vierte Planetenradgetriebe P4b und begrenzt die Getriebeeinheit ausgangsseitig.

Die Vorwärtsgetriebegänge V1b-V9b werden mittels der Koppeleinheiten S1b, S2b, S3b, S4b, S5b, S6b geschaltet (vgl. Figur 6). Die Getriebeeinheiten der beiden Ausführungsbeispiele sind kinematisch gleichwertig. Die Koppeleinheit S3b weist im Unterschied zum vorangegangenen Ausführungsbeispiel eine geänderte Kopplung auf, weshalb die Getriebegänge V1 b-V9b insbesondere in Bezug auf eine Beanspruchung der Verbindungswellen 16b, 17b, 18b, 19b geänderte Kraftflüsse aufweisen. Eine Schaltlogik der Getriebeeinheit ist unverändert. Aufgrund der geänderten Standübersetzungsverhältnisse der Planetenradgetriebe P2b, P3b, P4b weisen die Getriebegänge V1b-V9b andere Übersetzungsverhältnisse i₁b-i₉b auf. Zur Schaltung der Vorwärtsgetriebegänge V2b, V3b, V5b, V6b können mittels der Koppeleinheit S3b das zweite Sonnenrad P21 b und der zweite Planetenradträger P22a drehfest miteinander verbunden werden, wodurch mittels der Koppeleinheit S3b das zweite Planetenradgetriebe P2b verblockt werden kann.

Der erste Vorwärtsgetriebegang V1 b weist in diesem Ausführungsbeispiel zwischen der Antriebseinheit 11 b und der Abtriebseinheit 12b ein Übersetzungsverhältnis i₁b von 5,536 auf. Der erste Vorwärtsgetriebegang V1 b wird gebildet, indem die drei Koppeleinheiten S2b, S4b, S5b geschlossen werden. Die Koppeleinheit S2b verbindet das erste Sonnenrad P11 b drehfest mit dem Getriebegehäuse 13b. Die Koppeleinheit S4b verbindet den zweiten Planetenradträger P22b drehfest mit dem ersten Hohlrad P13b und dem dritten Sonnenrad P31 b. Die Koppeleinheit S5b verbindet das dritte Hohlrad P33b drehfest mit dem Getriebegehäuse 13b. Ein Kraftfluss für den ersten Getriebegang V1b wird über das zweite Planetenradgetriebe P2b eingeleitet und über die Koppeleinheit S4b aufgesplittet. Ein Teil des Kraftflusses wird über das erste Planetenradgetriebe P1 b auf das zweite Planetenradgetriebe P2b zurückgekoppelt. Ein weiterer Teil des Kraftflusses wird über das dritte Planetenradgetriebe P3b ausgeleitet.

Der zweite Vorwärtsgetriebegang V2b weist in diesem Ausführungsbeispiel zwischen der Antriebseinheit 11 b und der Abtriebseinheit 12b ein Übersetzungsverhältnis i₂b von 3,556 auf. Der zweite Vorwärtsgetriebegang V2b wird gebildet, indem die Koppeleinheiten S3b, S4b, S5b geschlossen werden. Die Koppeleinheit S3b verbindet den zweiten Planetenradträger P22b drehfest mit dem zweiten Sonnenrad P21 b. Die Koppeleinheit S4b verbindet den zweiten Planetenradträger P22b drehfest mit dem dritten Sonnenrad P31 b. Die Koppeleinheit S5b verbindet das dritte Hohlrad P33b drehfest mit dem Getriebegehäuse 13b. Ein Kraftfluss für den zweiten Vorwärtsgetriebegang V2b wird über das zweite Planetenradgetriebe P2b eingeleitet und über das dritte Planetenradgetriebe P3b ausgeleitet.

Der dritte Vorwärtsgetriebegang V3b weist in diesem Ausführungsbeispiel zwischen der Antriebseinheit 11 b und der Abtriebseinheit 12b ein Übersetzungsverhältnis i₃b von 2,359 auf. Der dritte Vorwärtsgetriebegang V3b wird gebildet, indem die Koppeleinheiten S2b, S3b, S5b geschlossen werden. Die Koppeleinheit S2b verbindet das erste Sonnenrad P11b drehfest mit dem Getriebegehäuse 13b. Die Koppeleinheit S3b verbindet den zweiten Planetenradträger P22b drehfest mit dem zweiten Sonnenrad P21 b. Die Koppeleinheit S5b verbindet das dritte Hohlrad P33b drehfest mit dem Getriebegehäuse 13b. Ein Kraftfluss für den dritten Vorwärtsgetriebegang V3b wird über das zweite Planetenradgetriebe P2b eingeleitet, über das erste Planetenradgetriebe P1 b weitergeleitet und über das dritte Planetenradgetriebe P3b wieder ausgeleitet.

Der vierte Vorwärtsgetriebegang V4b weist in diesem Ausführungsbeispiel zwischen der Antriebseinheit 11 b und der Abtriebseinheit 12b ein Übersetzungsvefiältnis i₄b von 1,701 auf. Der vierte Vorwärtsgetriebegang V4b wird gebildet, indem die Koppeleinheiten S2b, S5b, S6b geschlossen werden. Die Koppeleinheit S2b verbindet das erste Sonnenrad P11 b drehfest mit dem Getriebegehäuse 13b. Die Koppeleinheit S5b verbindet das dritte Hohlrad P33b drehfest mit dem Getriebegehäuse 13b. Die Koppeleinheit S6b verbindet das vierte Hohlrad P43b drehfest mit der Abtriebseinheit 12b. Ein Kraftfluss für den vierten Vorwärtsgetriebegang V4b wird über das vierte Planetenradgetriebe P4b eingeleitet und über die Koppeleinheit S6b aufgesplittet. Ein Teil des Kraftflusses ist über das dritte Planetenradgetriebe P3b mit dem vierten Planetenradgetriebe P4b rückgekoppelt. Ein weiterer Teil des Kraftflusses wird direkt ausgeleitet.

Der fünfte Vorwärtsgetriebegang V5b weist in diesem Ausführungsbeispiel zwischen der Antriebseinheit 11 b und der Abtriebseinheit 12b ein Übersetzungsverhältnis i₅b von 1,238 auf. Der fünfte Vorwärtsgetriebegang V5b wird gebildet, indem die Koppeleinheiten S2b, S3b, S6b geschlossen werden. Die Koppeleinheit S2b verbindet das erste Sonnenrad P11 b drehfest mit dem Getriebegehäuse 13b. Die Koppeleinheit S3b verbindet den zweiten Planetenradträger P22b drehfest mit dem zweiten Sonnenrad P21 b. Die Koppeleinheit S6b verbindet das vierte Hohlrad P43b drehfest mit der Abtriebseinheit 12b. Ein Kraftfluss für den fünften Getriebegang V5b wird mittels der Antriebswelle 11 b aufgesplittet. Ein Teil des Kraftflusses wird über das vierte Planetenradgetriebe P4b direkt ausgeleitet, ein weiterer Teil ist über das verblockte zweite Planetenradgetriebe P2b mit der Antriebseinheit 11 b rückgekoppelt. Ein Teil des über das vierte Planetenradgetriebe P4b geleiteten Kraftflusses wird über das erste Planetenradgetriebe P1 b ebenfalls an das zweite Planetenradgetriebe P2b geleitet.

Der sechste Vorwärtsgetriebegang V6b weist in diesem Ausführungsbeispiel zwischen der Antriebseinheit 11 b und der Abtriebseinheit 12b ein Übersetzungsverhältnis i₆b von 1,000 auf. Er ist als ein Direktgang ausgebildet. Der sechste Vorwärtsgetriebegang V6b wird gebildet, indem die Koppeleinheiten S3b, S4b, S6b geschlossen werden. Die Koppeleinheit S3b verbindet den zweiten Planetenradträger P22a drehfest mit dem zweiten Sonnenrad P21 b. Die Koppeleinheit S4b verbindet den zweiten Planetenradträger P22b drehfest mit dem vierten Sonnenrad P41 b. Die Koppeleinheit S6b verbindet das vierte Hohlrad P43b drehfest mit der Abtriebseinheit 12b. Ein Kraftfluss für den sechsten Getriebegang V6b wird über das vierte Planetenradgetriebe P4b eingeleitet und aufgesplittet. Ein Teil des Kraftflusses ist über das zweite Planetenradgetriebe P2b mit der Antriebseinheit 11 b rückgekoppelt. Ein weiterer Teil des Kraftflusses wird über das vierte Planetenradgetriebe P4b wieder ausgeleitet.

Der siebte Vorwärtsgetriebegang V7b weist in diesem Ausführungsbeispiel zwischen der Antriebseinheit 11b und der Abtriebseinheit 12b ein Übersetzungsverhältnis i₇b von 0,881 auf. Der siebte Vorwärtsgetriebegang V7b wird gebildet, indem die Koppeleinheiten S2b, S4b, S6b geschlossen werden. Die Koppeleinheit S2b verbindet das erste Sonnenrad P11 b drehfest mit dem Getriebegehäuse 13b. Die Koppeleinheit S4b verbindet den zweiten Planetenradträger P22b drehfest mit vierten Sonnenrad P41 b. Die Koppeleinheit S6b verbindet das vierte Hohlrad P43b drehfest mit der Abtriebseinheit 12b. Ein Kraftfluss für den siebten Vorwärtsgetriebegang V7b wird über das vierte Planetenradgetriebe P4b eingeleitet und aufgesplittet. Ein Teil des Kraftflusses ist über das zweite Planetenradgetriebe P2b und das erste Planetenradgetriebe P1 b mit der Antriebseinheit 11 b rückgekoppelt. Ein weiterer Teil des Kraftflusses wird über das vierte Planetenradgetriebe P4b ausgeleitet.

Der achte Vorwärtsgetriebegang V8b weist in diesem Ausführungsbeispiel zwischen der Antriebseinheit 11b und der Abtriebseinheit 12b ein Übersetzungsverhältnis i₈b von 0,726 auf. Der achte Vorwärtsgetriebegang V8b wird gebildet, indem die Koppeleinheiten S1b, S4b, S6b geschlossen werden. Die Koppeleinheit S1 b verbindet den zweiten Planetenradträger P22b drehfest mit dem Getriebegehäuse 13b. Die Koppeleinheit S4b verbindet das vierte Sonnenrad P41 b drehfest mit dem zweiten Planetenradträger P22b und damit drehfest mit dem Getriebegehäuse 13b. Die Koppeleinheit S6b verbindet das vierte Hohlrad P43b drehfest mit der Abtriebseinheit 12b. Ein Kraftfluss für den achten Vorwärtsgetriebegang V8b wird über das vierte Planetenradgetriebe P4b eingeleitet und ausgeleitet. Der neunte Vorwärtsgetriebegang V9b weist in diesem Ausführungsbeispiel zwischen der Antriebseinheit 11b und der Abtriebseinheit 12b ein Übersetzungsverhältnis i₉b von 0,580 auf. Der neunte Vorwärtsgetriebegang V9b wird gebildet, indem die Koppeleinheiten S1b, S2b, S6b geschlossen werden. Die Koppeleinheit S1b verbindet den zweiten Planetenradträger P22b drehfest mit dem Getriebegehäuse 13b. Die Koppeleinheit S2b verbindet das erste Sonnenrad P11 b drehfest mit dem Getriebegehäuse 13b. Die Koppeleinheit S6b verbindet das vierte Hohlrad P43b drehfest mit der Abtriebseinheit 12b. Ein über die Antriebseinheit 11b eingeleiteter Kraftfluss für den neunten Vorwärtsgetriebegang V9b wird vor dem ersten Planetenradgetriebe P1b aufgesplittet. Ein erster Teil des Kraftflusses wird über das zweite Planetenradgetriebe P2b und das erste Planetenradgetriebe P1 b an das vierte Planetenradgetriebe P4b geleitet. Ein zweiter Teil des Kraftflusses wird direkt an das vierte Planetenradgetriebe P4b geleitet. Mittels des vierten Planetenradgetriebes P4b wird der Kraftfluss wieder kombiniert und ausgeleitet.

Der Rückwärtsgetriebegang R1 b weist in diesem Ausführungsbeispiel zwischen der Antriebseinheit 11 b und der Abtriebseinheit 12b ein Übersetzungsverhältnis i_{R}b von -3,901 auf. Der Rückwärtsgetriebegang R1b wird gebildet, indem die Koppeleinheiten S1b, S2b, S5b geschlossen werden. Die Koppeleinheit S1b verbindet den zweiten Planetenradträger P22b drehfest mit dem Getriebegehäuse 13b. Die Koppeleinheit S2b verbindet das erste Sonnenrad P11b drehfest mit dem Getriebegehäuse 13b. Die Koppeleinheit S5b verbindet das dritte Hohlrad P33b drehfest mit dem Getriebegehäuse 13b. Ein Kraftfluss für den Rückwärtsgetriebegang R1b wird über das zweite Planetenradgetriebe P2b eingeleitet, über das erste Planetenradgetriebe P1b an das dritte Planetenradgetriebe P3b weitergeleitet und über das dritte Planetenradgetriebe P3a wieder ausgeleitet.

Ein Stufensprung ϕ_{1/2}b zwischen dem ersten und dem zweiten Vorwärtsgetriebegang V1b, V2b beträgt 1,557. Ein Stufensprung ϕ_{2/3}b zwischen dem zweiten und dem dritten Vorwärtsgetriebegang V2b, V3b beträgt 1,508. Ein Stufensprung ϕ_{3/4}b zwischen dem dritten und dem vierten Vorwärtsgetriebegang V3b, V4b beträgt 1,386. Ein Stufensprung ϕ_{4/5}b zwischen dem vierten und dem fünften Vorwärtsgetriebegang V4b, V5b beträgt 1,375. Ein Stufensprung ϕ_{5/6}b zwischen dem fünften und dem sechsten Vorwärtsgetriebegang V5b, V6b beträgt 1,238. Ein Stufensprung ϕ_{6/7}b zwischen dem sechsten und dem siebten Vorwärtsgetriebegang V6b, V7b beträgt 1,135. Ein Stufensprung ϕ_{7/8}b zwischen dem siebten und dem achten Vorwärtsgetriebegang V7b, V8b beträgt 1,214. Ein Stufensprung ϕ_{8/9}b zwischen dem achten und dem neunten Vorwärtsgetriebegang V8b, V9b beträgt 1,250. Eine Gesamtspreizung der Getriebeeinheit zwischen dem ersten Vorwärtsgetriebegang V1b und dem neunten Vorwärtsgetriebegang V9b beträgt ca. 9,5. Eine Spreizung zwischen dem ersten Vorwärtsgetriebegang V1 b und dem achten Vorwärtsgetriebegang V8b beträgt ca. 7,6. Eine Spreizung zwischen dem zweiten Vorwärtsgetriebegang V2b und dem neunten Vorwärtsgetriebegang V9b beträgt ca. 6,1. Die Getriebeeinheit ist grundsätzlich auch als ein Acht-Gang-Getriebe einsetzbar.

## Patentansprüche

1. Getriebeeinheit, insbesondere eine Kraftfahrzeuggetriebeeinheit, mit vier, einem ersten, einem zweiten, einem dritten und einem vierten, entlang einer Hauptrotationsachse (10a; 10b) hintereinander angeordneten Planetenradgetrieben (P1a, P2a, P3a, P4a; P1b, P2b, P3b, P4b), mit sechs Koppeleinheiten (S1a, S2a, S3a, S4a, S5a, S6a; S1b, S2b, S3b, S4b, S5b, S6b), die ermöglichen, neun Vorwärtsgetriebegänge (V1a-V9a; V1b-V9b) zu schalten, mit einer Antriebseinheit (11a; 11b), die drehfest mit einem zweiten Sonnenrad (P21a; P21b) des zweiten Planetenradgetriebes (P2a; P2b) und einem vierten Planetenradträger (P42a; P42b) des vierten Planetenradgetriebes (P4a; P4b) verbunden ist, und mit einer Abtriebseinheit (12a; 12b), die drehfest mit einem dritten Planetenradträger (P32a; P32b) des dritten Planetenradgetriebes (P3a; P3b) verbunden ist,
**gekennzeichnet durch**
ein erstes Hohlrad (P13a; P13b) des ersten Planetenradgetriebes (P1a; P1b), ein Kopplungselement (S42a; S42b), ein drittes Sonnenrad (P31a; P31b) des dritten Planetenradgetriebes (P3a; P3b) und ein viertes Sonnenrad (P41a; P41b) des vierten Planetenradgetriebes (P4a; P4b), die alle vier drehfest miteinander verbunden sind.

2. Getriebeeinheit nach Anspruch 1,
**gekennzeichnet durch**
ein Kopplungselement (S61a; S61b), das drehfest mit der Abtriebseinheit (12a; 12b) verbunden ist.

3. Getriebeeinheit nach Anspruch 1 oder 2,
**gekennzeichnet durch**
ein viertes Hohlrad (P43a; P43b) und ein Kopplungselement (S62a; S62b), die drehfest miteinander verbunden sind.

4. Getriebeeinheit nach den Ansprüchen 2 und 3,
**dadurch gekennzeichnet, dass**
eine der Koppeleinheiten (S6a; S6b) dazu vorgesehen ist, das drehfest mit der Abtriebseinheit (12a; 12b) verbundene Kopplungselement (S61a; S61b) und das drehfest mit dem vierten Hohlrad (P43a; P43b) verbundene Kopplungselement (S62a; S62b) drehfest miteinander zu verbinden.

5. Getriebeeinheit nach einem der vorhergehenden Ansprüche,
**gekennzeichnet durch**
ein drittes Hohlrad (P33a; P33b) und ein Kopplungselement (S51a; S51b), die drehfest miteinander verbunden sind.

6. Getriebeeinheit nach Anspruch 5,
**dadurch gekennzeichnet, dass**
eine der Koppeleinheiten (S5a; S5b) dazu vorgesehen ist, das drehfest mit dem dritten Hohlrad (P33a; P33b) verbundene Kopplungselement (S51a; S51b) drehfest mit einem Getriebegehäuse (13a; 13b) zu verbinden.

7. Getriebeeinheit nach einem der vorhergehenden Ansprüche,
**gekennzeichnet durch**
drei Kopplungselemente (S11a, S32a, S41a; S11b, S32b, S43b) und einen zweiten Planetenradträger (P22a; P22b), die alle vier drehfest miteinander verbunden sind.

8. Getriebeeinheit nach Anspruch 7,
**dadurch gekennzeichnet, dass**
eine der Koppeleinheiten (S4a; S4b) dazu vorgesehen ist, eines der drehfest mit dem zweiten Planetenradträger (P22a; P22b) verbundenen Kopplungselemente (S41a; S41b) und das drehfest mit dem ersten Hohlrad (P13a; P13b) verbundene Kopplungselement (S42a; S42b) drehfest miteinander zu verbinden.

9. Getriebeeinheit zumindest nach Anspruch 7,
**dadurch gekennzeichnet, dass**
eine der Koppeleinheiten (S1a; S1b) dazu vorgesehen ist, eines der drehfest mit dem zweiten Planetenradträger (P22a; P22b) verbundenen Kopplungselemente (S11a; S11b) drehfest mit einem Getriebegehäuse (13a) zu verbinden.

10. Getriebeeinheit nach einem der vorhergehenden Ansprüche,
**gekennzeichnet durch**
ein erstes Sonnenrad (P11a; P11b) und ein Kopplungselement (S21a; S21b), die drehfest miteinander verbunden sind.

11. Getriebeeinheit nach Anspruch 10,
**dadurch gekennzeichnet, dass**
eine der Koppeleinheiten (S2a; S2b) dazu vorgesehen ist, das drehfest mit dem ersten Sonnenrad (P11a; P11b) verbundene Kopplungselement (S21a; S21b) drehfest mit einem Getriebegehäuse (13a; 13b) zu verbinden.

12. Getriebeeinheit nach einem der vorhergehenden Ansprüche,
**gekennzeichnet durch**
einen ersten Planetenradträger (P12a; P12b) und ein zweites Hohlrad (P23a; P23b), die drehfest miteinander verbunden sind.

13. Getriebeeinheit nach Anspruch 12,
**gekennzeichnet durch**
ein Kopplungselement (S31a; S31b), das drehfest mit dem zweiten Hohlrad (P23a) oder drehfest mit dem zweiten Sonnenrad (P21b) verbunden ist.

14. Getriebeeinheit zumindest nach den Ansprüchen 7 und 13,
**dadurch gekennzeichnet, dass**
eine der Koppeleinheiten (S3a; S3b) dazu vorgesehen ist, eines der drehfest mit dem zweiten Planetenradträger (P22a; P22b) verbundenen Kopplungselemente (S32a; S32b) und das drehfest mit dem zweiten Hohlrad (P23a) oder dem zweiten Sonnenrad (P21b) verbundene Kopplungselement (S31a; S31b) drehfest miteinander zu verbinden.

## Claims

1. Transmission unit, in particular motor vehicle transmission unit, comprising four - a first, a second, a third and a fourth - planetary gear sets (P1a, P2a, P3a, P4a; P1b, P2b, P3b, P4b) arranged one behind the other along a main axis of rotation (10a; 10b), further comprising six coupling units (S1a, S2a, S3a, S4a, S5a, S6a; S1b, S2b, S3b, S4b, S5b, S6b) which allow the selection of nine forward gears (V1a-V9a; V1 b-V9b), further comprising a drive unit (11a; 11b) which is non-rotatably connected to a second sun gear (P21a; P21b) of the second planetary gear set (P2a; P2b) and to a fourth planet carrier (P42a; P42b) of the fourth planetary gear set (P4a; P4b), and further comprising an output unit (12a; 12b) which is non-rotatably connected to a third planet carrier (P32a; P32b) of the third planetary gear set (P3a; P3b),
**characterised by**
a first internal gear (P13a; P13b) of the first planetary gear set (P1a; P1b), a coupling element (S42a; S42b), a third sun gear (P31a; P31b) of the third planetary gear set (P3a; P3b) and a fourth sun gear (P41a; P41b) of the fourth planetary gear set (P4a; P4b), all four being non-rotatably connected to one another.

2. Transmission unit according to claim 1,
**characterised by**
a coupling element (S61a; S61b) which is non-rotatably connected to the output unit (12a; 12b).

3. Transmission unit according to claim 1 or 2,
**characterised by**
a fourth internal gear (P43a; P43b) and a coupling element (S62a; S62b) which are non-rotatably connected to one another.

4. Transmission unit according to claims 2 and 3,
**characterised in that**
one of the coupling units (S6a; S6b) is provided for establishing a non-rotatable connection between the coupling element (S61a; S61b) non-rotatably connected to the output unit (12a; 12b) and the coupling element (S62a; S62b) non-rotatably connected to the fourth internal gear (P43a; P43b).

5. Transmission unit according to any of the preceding claims,
**characterised by**
a third internal gear (P33a; P33b) and a coupling element (S51a; S51b) which are non-rotatably connected to one another.

6. Transmission unit according to claim 5,
**characterised in that**
one of the coupling units (S5a; S5b) is provided for establishing a non-rotatable connection between the coupling element (S51a; S51b) non-rotatably connected to the third internal gear (P33a; P33b) and a transmission housing (13a; 13b).

7. Transmission unit according to any of the preceding claims,
**characterised by**
three coupling elements (S11a, S32a, S41a; S11b, S32b, S43b) and a fourth planet carrier (P22a; P22b), all four being non-rotatably connected to one another.

8. Transmission unit according to claims 7 and 8,
**characterised in that**
one of the coupling units (S4a; S4b) is provided for establishing a non-rotatable connection between one of the coupling elements (S41a; S41b) non-rotatably connected to the second planet carrier (P22a; P22b) and the coupling element (S42a; S42b) non-rotatably connected to the first internal gear (P13a; P13b).

9. Transmission unit according to at least claim 8,
**characterised in that**
one of the coupling units (S1a; S1b) is provided for establishing a non-rotatable connection between one of the coupling elements (S11a; S11b) non-rotatably connected to the second planet carrier (P22a; P22b) and a transmission housing (13a).

10. Transmission unit according to any of the preceding claims,
**characterised by**
a first sun gear (P11a; P11b) and a coupling element (S21a; S21b) which are non-rotatably connected to one another.

11. Transmission unit according to claim 11,
**characterised in that**
one of the coupling units (S2a; S2b) is provided for establishing a non-rotatable connection between the coupling element (S21a; S21b) non-rotatably connected to the first sun gear (P11a; P11b) and a transmission housing (13a; 13b).

12. Transmission unit according to any of the preceding claims,
**characterised by**
a first planet carrier (P12a; P12b) and a second internal gear (P23a; P23b) which are non-rotatably connected to each other.

13. Transmission unit according to claim 13,
**characterised by**
a coupling element (S31a; S31b) which is non-rotatably connected to the second internal gear (P23a) or to the second sun gear (P21b).

14. Transmission unit according to at least claims 7 and 13,
**characterised in that**
one of the coupling units (S3a; S3b) is provided for establishing a non-rotatable connection between one of the coupling elements (S32a; S32b) non-rotatably connected to the second planet carrier (P22a; P22b) and the element (S31a; S31b) non-rotatably connected to the second internal gear (P23a) or to the second sun gear (P21b).

## Revendications

1. Unité de transmission, notamment une unité de transmission de véhicule à moteur, comprenant quatre - un premier, un deuxième, un troisième et un quatrième, engrenages planétaires (P1a, P2a, P3a, P4a, P1b, P2b, P3b, P4b) disposés les uns derrière les autres le long d'un axe principal de rotation (10a, 10b) comportant six unités d'accouplement (S1a, S2a, S3a, S4a, S5a, S6a, S1b, S2b, S3b, S4b, S5b, S6b) qui permettent d'enclencher neuf vitesses de marche avant (V1a-V9a ; V1b-V9b), comportant une unité d'entraînement (11a; 11b) qui est reliée solidaire en rotation à une deuxième roue solaire (P21a, P21b) du deuxième engrenage planétaire (P2a, P2b) et à un quatrième porte-satellites (P42a ; P42b) du quatrième engrenage planétaire (P4a, P4b) et comportant une unité de sortie (12a, 12b) qui est reliée solidaire en rotation à un troisième porte-satellites (P32a, P32b) du troisième engrenage planétaire (P3a, P3b),
**caractérisée par** une première couronne (P13a, P13b) du premier engrenage planétaire (P1a, P1b), un élément d'accouplement (S42a, S42b), une troisième couronne (P31a, P31b) du troisième engrenage planétaire (P3a, P3b) et une quatrième couronne (P41a, P41b) du quatrième engrenage planétaire (P4a, P4b) qui tous les quatre sont reliés ensemble solidaires en rotation.

2. Unité de transmission selon la revendication 1, **caractérisée par** un élément d'accouplement (S61a, S61b) qui est relié solidaire en rotation à l'unité de sortie (12a, 12b).

3. Unité de transmission selon la revendication 1 ou 2, **caractérisée par** une quatrième couronne (P43a, P43b) et un élément d'accouplement (S62a, S62b) qui sont reliés ensemble solidaires en rotation.

4. Unité de transmission selon les revendications 2 et 3, **caractérisée en ce que** l'une des unités d'accouplement (S6a, S6b) sert à relier solidaire en rotation ensemble l'élément d'accouplement (S61a, S61b) relié solidaire en rotation à l'unité de sortie (12a, 12b) et l'élément d'accouplement (S62a, S62b) relié solidaire en rotation à la quatrième couronne (P43a, P43b).

5. Unité de transmission selon l'une quelconque des revendications précédentes, **caractérisée par** une troisième couronne (P33a, P33b) et un élément d'accouplement (S51a, S51b) qui sont reliés ensemble solidaires en rotation.

6. Unité de transmission selon la revendication 5, **caractérisée en ce que** l'une des unités d'accouplement (S5a, S5b) sert à relier solidaire en rotation l'élément d'accouplement (S51a, S51b) relié solidaire en rotation à la troisième couronne (P33a, P33b) au carter de transmission (13a, 13b).

7. Unité de transmission selon l'une quelconque des revendications précédentes, **caractérisée par** une première couronne (P13a, P13b), un élément d'accouplement (S42a, S42b), une troisième roue solaire (P31a, P31b) et une quatrième roue solaire (P41a, P41b) qui tous les quatre sont reliés ensemble solidaires en rotation.

8. Unité de transmission selon l'une quelconque des revendications précédentes, **caractérisée par** trois éléments d'accouplement (S11a, S32a, S41a, S11b, S32b, S43b) et un deuxième porte-satellites (P22a, P22b) qui tous les quatre sont reliés ensemble solidaires en rotation.

9. Unité de transmission selon les revendications 7 et 8, **caractérisée en ce que** l'une des unités d'accouplement (S4a, S4b) sert à relier solidaire en rotation l'un des éléments d'accouplement (S41a, S41b) relié solidaire en rotation au deuxième porte-satellites (P22a, P22b) à l'élément d'accouplement (S42a, S42b) relié solidaire en rotation à la première couronne (P13a, P13b).

10. Unité de transmission selon au moins la revendication 8, **caractérisée en ce que** l'une des unités d'accouplement (S1a, S1b) sert à relier solidaire en rotation l'un des éléments d'accouplement (S11a, S11b) relié solidaire en rotation au deuxième porte-satellites (P22a, P22b) à un carter de transmission (13a).

11. Unité de transmission selon l'une quelconque des revendications précédentes, **caractérisée par** une première roue solaire (P11a, P11b) et un élément d'accouplement (S21a, S21b) qui sont reliés ensemble solidaires en rotation.

12. Unité de transmission selon la revendication 11, **caractérisée en ce que** l'une des unités d'accouplement (S2a, S2b) sert à relier solidaire en rotation l'élément d'accouplement (S21a, S21b) relié solidaire en rotation à la première roue solaire (P11a, P11b) à un carter de transmission (13a, 13b).

13. Unité de transmission selon l'une quelconque des revendications précédentes, **caractérisée par** un premier porte-satellites (P12a, P12b) et une deuxième couronne (P23a, P23b) qui sont reliés ensemble solidaires en rotation.

14. Unité de transmission selon la revendication 13, **caractérisée par** un élément d'accouplement (S31a, S31b) qui est relié solidaire en rotation à la deuxième couronne (P23a) ou relié solidaire en rotation à la deuxième roue solaire (P21b).
